# EUROPÄISCHE PATENTSCHRIFT

(11) **EP 0 503 487 B1**
(45) Veröffentlichungstag und Bekanntmachung des Hinweises auf die Patenterteilung: **30.08.1995**
(21) Anmeldenummer: 92103816.2
(22) Anmeldetag: 06.03.1992
(51) Int. Cl.: H04Q 11/04, H04M 11/06

(54) **Protokollanpassung**
Protocol adaptation
Adaptation du protocole

(30) Priorität: 11.03.1991 DE 4107742
(43) Veröffentlichungstag der Anmeldung: 16.09.1992
(73) Patentinhaber: Alcatel SEL Aktiengesellschaft, D-70435 Stuttgart (DE)
(72) Erfinder: Arnold, Wolfgang, W-7530 Pforzheim (DE); Hoyler, Rudolf, W-7250 Leonberg (DE)
(74) Vertreter: Pohl, Herbert, Dipl.-Ing.

(56) Entgegenhaltungen:
- US-A- 4 891 783
- ISSLS '88, SESSION 10, PAPER 2 11. September 1988, BOSTON, US Seiten 10.2.1 - 6 TROUVAT ET AL. 'ISDN, initial results: lessons for tomorrow'

## Beschreibung

Die Erfindung betrifft ein Verfahren zum Anpassen von Protokollen eines Telekommunikationsendgerätes an ein Protokoll einer Digital-Vermittlungsstelle.

Aus der US-A-4 891 783 ist ein Verfahren zur Datenübertragung zwischen Endgeräten die verschiedene Protokolle enthalten bekannt.

Zum Kennzeichenaustausch zwischen einer ISDN-Digitalvermittlungsstelle und ISDN-Telekommunikationsendgeräte wurde die Richtlinie 1TR6 der Deutschen Bundespost in der Bundesrepublik Deutschland vorgegeben. Somit werden alle ISDN-Endgeräte gemäß dem Protokoll 1TR6 ausgestattet, um mit einer Digitalvermittlungsstelle, der dieses Protokoll fest vorgegeben ist, Informationen austauschen zu können (vgl. ISDN-D-Kanal-Protokoll 1TR6, Ausgabe 1/90, Deutsche Bundespost, FTZ).

In Europa wird derzeit in einem Normungsausschuß des ETSI (European Telecommunications Standards Institute) ein ISDN-Protokoll für Schicht-3-Funktionen erstellt (vgl. Document No. (ETS T/S 46-30), Version 1, 19.7.1990, Integrated Services Digital Network (ISDN) User-Network Interface Layer 3 Specification for basic call control, Application of CCITT Recommendations Q. 930/I.450 and Q. 931/I.451).

Wenn nun das ETSI-Protokoll' in Europa eingeführt wird, d.h. in den Digital-Vermittlungsstellen verwendet wird, müssen in sämtlichen ISDN-Endgeräten die bisherigen Protokolle (in der Bundesrepublik Deutschland das zuvorgenannte Protokoll 1TR6), gegen das ETSI-Protokoll ausgetauscht werden.

Der Erfindung liegt die Aufgabe zugrunde, ein Verfahren anzugeben, welches eine solche Anpassung an ein neues in einer Vermittlungsstelle fest vorgebenes Protokoll ermöglicht, ohne daß in jedem Endgerät ein Austausch vorgenommen werden muß.

Diese Aufgabe wird erfindungsgemäß durch die technische Lehre des Patentanspruchs 1 gelöst.

Aufgrund des erfindungsgemäßen Verfahrens und da jedes Endgerät bereits mit den zwei ISDN-Protokollen arbeiten kann, kann in vorteilhafter Weise durch eine eindeutige, das jeweilige Protokoll kennzeichnende Statusabfrage zum Zeitpunkt einer zukünftigen Umstellung der Protokolle (z.B. von 1TR6 auf ETSI) in einer Vermittlungsstelle das jeweilige Endgerät ohne Zusatzaufwand direkt an das neue Protokoll angepaßt, d.h. umgeschaltet werden.

Weitere vorteilhafte Ausgestaltungen des Gegenstandes der Erfindung sind den Unteransprüchen zu entnehmen.

Im folgenden wird die Erfindung anhand eines Ausführungsbeispiels näher erläutert. Es zeigen:
- Fig. 1: ein Verfahrensablauf gemäß der Erfindung für das Protokoll 1TR6 und
- Fig. 2: ein Verfahrensablauf gemäß der Erfindung für das ETSI-Protokoll.

Es wird davon ausgegangen, daß ein an eine Digital-Vemittungsstelle DVST anzupassendes Telekommunikationsendgerät zwei unterschiedliche Protokolle enthält, die z.B. in EEPROM's abgelegt sind. Ein erstes Protokoll ist das ISDN-D-Kanal-Protokoll 1TR6 der Deutschen Bundespost und ein zweites Protokoll ist ein ISDN-Schicht-3-Protokoll des ETSI, im folgenden Europrotokoll bezeichnet.

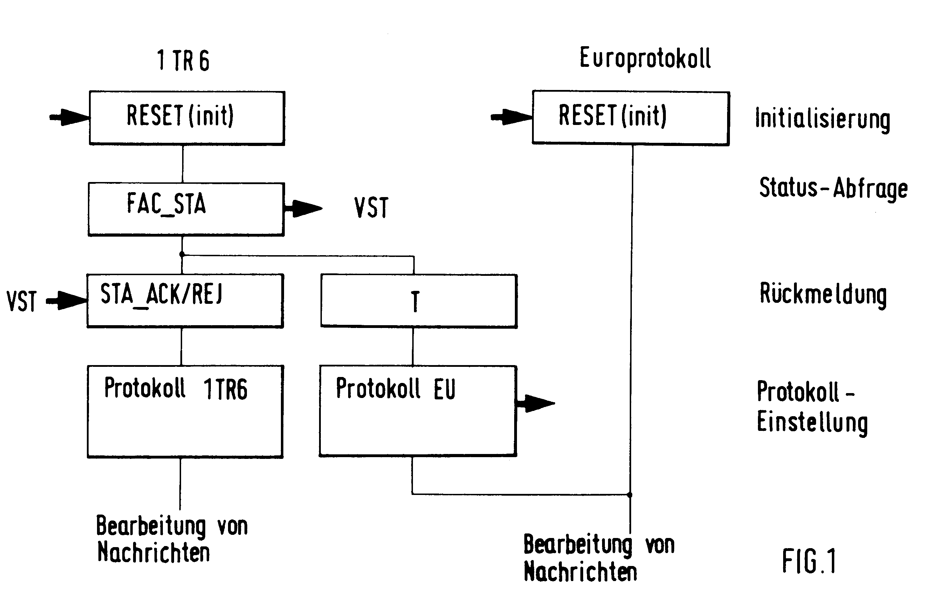

Nach einem Initialisieren RESET(init) des Endgerätes ist, wie in Fig. 1 gezeigt, als erstes Protokoll das Protokoll 1TR6 aktiviert. Danach wird eine Statusabfrage FAC(ility) STA(tus) gemäß dem Protokoll 1TR6 zur Vermittlungsstelle VST gesendet und gleichzeitig ein Zeitgeber T gestartet. Das erste Element der Statusabfrage, der Protocol Discriminator, kennzeichnet das verwendete Protokoll.

Aufgrund der Statusanfrage erfolgt eine den Protocol Discriminator enthaltende Statusrückmeldung STA ACK/REJ von der Vermittlungsstelle. Falls eine Protokollübereinstimmung signalisiert wird STA ACK/REJ, kann das Endgerät mit dem bereits aktivierten Protokoll 1TR6 betrieben werden (vgl. Fig. 1).

Falls eine durch den Zeitgeber T vorgegebene Zeitdauer überschritten wird, ohne daß eine Statusrückmeldung des ersten Protokolls empfangen wird, wird das Europrotokoll EU aktiviert.

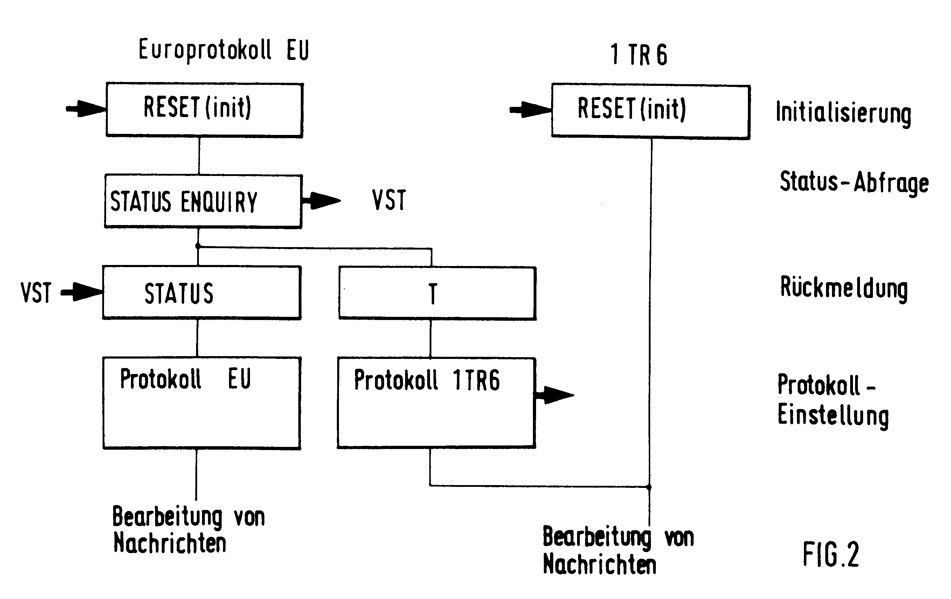

Geht man davon aus, daß als erstes Protokoll das Europrotokoll EU nach dem Initialiseren (RESET(init) des Endgerätes aktiviert ist, wie in Fig. 2 dargestellt, so wird eine Statusanfrage STATUS ENQUIRY gemäß dem Europrotokoll zur Vermittlungsstelle VST gesendet. Auch hier kennzeichnet das erste Element (der Protocol Discriminator) der Statusanfrage das verwendete Protokoll.

Dann erfolgt eine den Protocol Discriminator enthaltende Statusrückmeldung STATUS, wobei infolge einer signalisierten Protokollübereinstimmung das Gerät mit dem Europrotokoll EU (vgl. Fig. 2) betrieben wird.

Falls keine Statusrückmeldung vor Ablauf der vom Zeitgeber T vorgegebenen Zeitdauer empfangen wird, wird auf das Protokoll 1TR6 umgeschaltet.

Somit ist aufgrund des erfindungsgemäßen Verfahrens eine einfache, kostengünstige Protokollanpassung möglich, ohne daß in den Endgeräten eine Hardware- oder Softwareänderung notwendig wird.

## Patentansprüche

1. Verfahren zum Anpassen eines zwei unterschiedliche Protokolle zum Informationsaustausch enthaltenden Telekommunikationsendgerätes an eine mit einem fest vorgegebenen Protokoll arbeitende Digital-Vermittlungsstelle, bestehend aus folgenden Schritten:
- Initialisieren des Endgerätes und Aktivieren eines der zwei Protokolle,
- Senden einer das aktivierte Protokoll kennzeichnenden Statusanfrage an die Vermittlungsstelle und Starten eines Zeitgebers und
- Betreiben des Endgerätes mit dem aktivierten Protokoll, falls eine Statusrückmeldung von der Vermittlungsstelle eine Protokollübereinstimmung signalisiert, oder
- Aktivieren und Betreiben des Endgerätes mit dem anderen Protokoll, falls die Statusrückmeldung von der Vermittlungsstelle keine Protokollübereinstimmung signalisiert oder falls eine durch den Zeitgeber vorgegebene Zeitdauer abgelaufen ist, ohne daß eine Statusrückmeldung empfangen wurde.

2. Verfahren nach Anspruch 1, wobei als erstes Protokoll das ISDN-D-Kanal-Protokoll 1TR6 der Deutschen Bundespost und als zweites Protokoll das ISDN-Protokoll des ETSI (European Telecommunication Standards Institute) für Schicht 3 Funktionen (User-Network Interface Layer 3 Specificaiton for basic call control) verwendet wird.

3. Verfahren nach Anspruch 2, wobei in der Statusanfrage und der Statusrückmeldung ein das erste Element bildender und das verwendete Protokoll kennzeichnender Protocol Discriminator in der Vermittlungsstelle bzw. in dem Endgerät ausgewertet wird.

## Claims

1. Method of adapting a telecommunications terminal containing two different communications protocols to a digital exchange operating according to a fixed protocol, comprising the following steps:
- initializing the terminal and activating one of the two protocols;
- sending to the exchange a status inquiry indicating the activated protocol,and starting a timer, and
- operating the terminal according to the activated protocol if a status message from the exchange signals agreement between the two protocols, or
- activating the other protocol and operating the terminal according thereto if the status message from the exchange signals disagreement between the two protocols or if the time predetermined by the timer has expired without a status message being received.

2. A method as claimed in claim 1 wherein the ISDN D-channel protocol 1TR6 of the Deutsche Bundespost is used as the first protocol, and the ISDN protocol of ETSI (European Telecommunications Standards Institute) for Layer 3 functions (User-Network Interface Layer 3 Specification for basic call control) as the second protocol.

3. A method as claimed in claim 2 wherein in the status inquiry and the status message, a protocol discriminator forming the first information element and indicating the protocol being used is evaluated at the exchange and the terminal, respectively.

## Revendications

1. Procédé d'adaptation d'un équipement terminal de télécommunication, contenant deux protocoles différents pour l'échange d'information, à un centre de commutation numérique travaillant avec un protocole prescrit en permanence, constitué des pas suivants:
- initialiser l'équipement terminal et activer l'un des deux protocoles,
- envoyer au centre de commutation une interrogation concernant le statut caractérisant le protocole activé et démarrer un temporisateur et
- exploiter l'équipement terminal avec le protocole activé dans le cas où un accusé de réception de statut, en provenance du centre de commutation signale une coïncidence de protocole, ou
- activer et exploiter l'équipement terminal avec l'autre protocole au cas où l'accusé de réception de statut, en provenance du centre de commutation, ne signale aucune coïncidence de protocole ou au cas où un intervalle de temps prescrit par le temporisateur s'est écoulé sans que soit reçu un accusé de réception relatif au statut.

2. Procédé selon la revendication 1, dans lequel comme premier protocole on emploie le protocole RNIS canal D de la Poste Fédérale Allemande et comme second protocole le protocole RNIS de l'Institut Européen des normes de Télécommunication ETSI pour les fonctions de la couche 3 (spécification de la couche 3 interface utilisateur-réseau pour la commande d'appel de base).

3. Procédé selon la revendication 2, dans lequel, dans l'interrogation concernant le statut et dans l'accusé de réception de statut, un discriminateur de protocole formant le premier élément et caractérisant le protocole employé est traité dans le centre de commutation ou dans l'équipement terminal.
